# EUROPÄISCHE PATENTSCHRIFT

(11) **EP 3 560 652 B1**
(45) Veröffentlichungstag und Bekanntmachung des Hinweises auf die Patenterteilung: **23.06.2021**
(21) Anmeldenummer: 18168789.8
(22) Anmeldetag: 23.04.2018
(51) Int. Cl.: B23K 37/02, B23K 37/04, B23K 26/08, B23K 26/38, B23K 101/18

(54) **VERFAHREN ZUM BEARBEITEN VON EINEM PLATTENFÖRMIGEN MATERIAL MITTELS EINES SCHNEIDSTRAHLS, UND DATENVERARBEITUNGSPROGRAMM**
METHOD OF PROCESSING PLATE-SHAPED MATERIAL BY MEANS OF A CUTTING JET, AND DATA PROCESSING PROGRAM
PROCÉDÉ DE TRAITEMENT D'UN MATÉRIAU EN FORME DE PLAQUE AU MOYEN D'UN FAISCEAU DE COUPE, ET PROGRAMME DE TRAITEMENT DE DONNÉES

(43) Veröffentlichungstag der Anmeldung: 30.10.2019
(73) Patentinhaber: TRUMPF Werkzeugmaschinen GmbH + Co. KG, 71254 Ditzingen (DE)
(72) Erfinder: Hultsch, Andreas, 01904 Neukirch (DE); Knobel, Carsten, 02689 Sohland (DE); Witte, Robert, 02625 Bautzen (DE)
(74) Vertreter: Mammel und Maser

(56) Entgegenhaltungen:
- DE-A1-102005 002 670
- DE-A1-102008 049 791
- US-A- 5 806 390
- US-A1- 2005 277 104

## Beschreibung

Die Erfindung betrifft ein Verfahren zum Bearbeiten von einem plattenförmigen Material mittels eines Schneidstrahls in einer Bearbeitungsmaschine zur Herstellung von Werkstücken, und ein Datenverarbeitungsprogramm.

Aus der US 5 806 390 A (Basis für den Oberbegriff des Anspruchs 1) ist eine Bearbeitungsmaschine zum Bearbeiten von plattenförmigen Materialien bekannt. Das zu bearbeitende plattenförmige Material ist in einer Erstreckungsrichtung größer als ein Arbeitsbereich einer Schneideinrichtung. Zum vollständigen Bearbeiten des plattenförmigen Materials wird dieses in mehrere aufeinanderfolgende Schneidzonen aufgegliedert, um anschließend innerhalb jeder Schneidzone die sich darin befindenden Werkstücke oder nur Teile der Werkstücke zu schneiden.

Aus der DE 10 2008 049 791 A1 ist ein Verfahren zum schnittmustergerechten Zuschneiden von flächigem Gut bekannt. Zur Durchführung dieses Verfahrens ist eine Schneideinrichtung mit einem Schneidtisch vorgesehen, entlang dessen ein Schneidkopf mittels einer Brücke verfahrbar ist. Das Schneidgut wird in einer vorgegebenen Referenzlage auf der Tischfläche des Schneidtischs aufgelegt und ist in seiner Erstreckungsrichtung kleiner als die Verfahrstrecke der Brücke entlang des Schneidtisches.

Aus der WO 2006/079230 A1 ist ein Verfahren zum Laserschneiden von Rohblechen mit einer Laserschneidmaschine bekannt, welche einen in einer horizontalen Ebene bewegbaren Laserschneidkopf aufweist. Das plattenförmige Material wird in einer Vorschubrichtung schrittweise zur Bearbeitung in eine definierte Position in einen Schneidbereich der Laserschneidmaschine eingeschoben. In einem ersten Bearbeitungsschritt wird das Rohblech in einem bearbeiteten Bereich, der in der Ausdehnung dem Schneidbereich entspricht, im Ganzen oder in Teilen mittels Laserschneiden bearbeitet. Die mittels Laserschneiden gefertigten Teile und ein Restgitter werden von dem plattenförmigen Material abgetrennt. Darauffolgend werden die mittels Laserschneiden gefertigten Teile zusammen mit dem Restgitter aus dem Arbeitsbereich herausgeführt und einer Entnahmevorrichtung zugeführt, in welcher die Werkstücke und das Restgitter entladen werden.

Aus der DE 10 2005 002 670 A1 ist ein Verfahren zum Bearbeiten von Werkstücken aus einer Kunststofffolie mit einer Laserstrahlung bekannt. Herzustellende Teile aus dem endlosen Bandmaterial aus einer Kunststofffolie sind länger als ein Arbeitsbereich eines Laserstrahls, der mittels Scannerspiegel ausgelenkt werden kann. Bei großformatigen Werkstücken, die größer als das Arbeitsfeld sind, werden mehrere aufeinanderfolgende Taktungen des Vorschubes vorgenommen, um das Bauteil zu bilden. An den Anschlussstellen bilden sich sogenannte Trennstellen oder Nachsetzstellen, die die Qualität des Werkstückes nachteilig beeinflussen.

Aus der DE 10 2016 117 681 A1 ist eine Bearbeitungsanlage mit einer Laserbearbeitungsmaschine zur trennenden Bearbeitung von plattenförmigen Materialien bekannt. Diese Bearbeitungsmaschine umfasst eine Umhausung, innerhalb der ein Arbeitsbereich zur Bearbeitung des plattenförmigen Materials vorgesehen ist. Ein Laserschneidkopf ist entlang einer horizontalen Ebene innerhalb des Arbeitsbereiches verfahrbar, um mittels eines Schneidvorgangs Werkstücke aus dem plattenförmigen Material zu schneiden. Eingangsseitig zur Umhausung kann eine Beladestation vorgesehen sein, um das plattenförmige Material zuzuführen. Ausgangsseitig zur Bearbeitungsmaschine kann eine Entladestation vorgesehen sein, durch welche das plattenförmige Material mit den bearbeiteten Werkstücken aus der Umhausung herausgeführt und entladen werden kann.

Eine solche Laserbearbeitungsmaschine ermöglicht die Bearbeitung von plattenförmigen Materialien, deren Erstreckungsrichtung größer als eine Länge des Arbeitsbereiches der Bearbeitungsmaschine ist. Das plattenförmige Material wird durch den Arbeitsbereich schrittweise hindurchgeführt.

Bei der Bearbeitung von plattenförmigen Materialien, deren Länge größer als der Arbeitsbereich der Bearbeitungsmaschine ist, werden die innerhalb des Arbeitsbereiches sich befindlichen und geschachtelten Werkstücke durch Einbringen einer Schneidkontur hergestellt. Alle Schneidkonturen, welche den Arbeitsbereich übergreifen oder über diesen hinausgehen, werden aufgetrennt. Nach einem Weitertakten des plattenförmigen Materials werden die offenen Schneidkonturen eines Werkstückes fertiggestellt. Dabei entstehen sogenannte Nachsetzmarken. Solche Nachsetzmarken bzw. Trennstellen können zu einer Reduzierung in der Qualität der Werkstücke führen.

Der Erfindung liegt die Aufgabe zugrunde, ein Verfahren zum Bearbeiten von einem plattenförmigen Material mittels eines Schneidstrahls einer Bearbeitungsmaschine zur Herstellung von Werkstücken sowie ein Datenverarbeitungsprogramm für die Bearbeitungsanlage vorzuschlagen, wodurch Nachsetzmarken an einem Werkstück auf ein Minimum reduziert werden, ohne dass ein Eingriff in die Geometrie der Werkstücke bzw. der Anordnung und/oder Schachtelung der Werkstücke innerhalb des plattenförmigen Materials erfolgt.

Diese Aufgabe wird durch ein Verfahren zum Bearbeiten von einem plattenförmigen Material mittels eines Schneidstrahls, insbesondere eines Laserstrahls einer Bearbeitungsmaschine gemäß dem Anspruch 1 gelöst, bei welcher das plattenförmige Material, welches in einer Erstreckungsrichtung größer als ein Arbeitsbereich der Bearbeitungsmaschine ist, in einem ersten Arbeitsschritt in dem Arbeitsbereich der Bearbeitungsmaschine positioniert wird und mit einer Datenverarbeitungseinrichtung aus einem Bearbeitungsprogramm alle vollständigen Schneidkonturen für ein oder mehrere Werkstücke ermittelt werden, die innerhalb des Arbeitsbereiches liegen und in einem Schneidvorgang die vollständig innerhalb des Arbeitsbereiches liegenden Werkstücke hergestellt werden und bei dem solche Werkstücke, welche teilweise innerhalb des Arbeitsbereiches für einen ersten Arbeitsschritt liegen und sich auch außerhalb des Arbeitsbereiches erstrecken, jedoch in der Länge gleich oder kleiner als die Größe des Arbeitsbereiches sind in diesem ersten Arbeitsschritt nicht geschnitten werden und bei dem die Schneidkonturen von Werkstücken, die sich in einem ersten oder weiteren Arbeitsschritt über den Arbeitsbereich hinaus erstrecken, deren Länge in Transportrichtung des plattenförmigen Materials gesehen, gleich oder kleiner als die Länge des Arbeitsbereiches ist, in einem nachfolgenden Arbeitsschritt in das plattenförmige Material eingebracht werden, in dem das plattenförmige Material in eine weitere Position weitergetaktet wird, so dass diese Werkstücke wiederum innerhalb des Arbeitsbereiches der Bearbeitungsmaschine liegen. Dieses Verfahren ermöglicht die Minimierung von Nachsetzstellen bzw. Trennstellen. Die Werkstücke sind durch das Bearbeitungsprogramm zueinander geschachtelt und ausgerichtet. Ebenso sind die Positionen als auch die Größe der Werkstücke durch das Bearbeitungsprogramm bekannt. Alle vollständig innerhalb des Arbeitsbereiches liegenden Werkstücke werden durch den Schneidvorgang aus dem plattenförmigen Material hergestellt. Durch eine Weitertaktung des plattenförmigen Materials, welche bevorzugt kleiner als die Länge des Arbeitsfeldes ist, können weitere vollständig sich neu in dem Arbeitsbereich befindlichen Werkstücke geschnitten werden. Dies ermöglicht, dass ein Auftrennen von Schneidkonturen der Werkstücke, die über die Grenze des Arbeitsbereiches hinausgehen, verhindert oder zumindest reduziert werden.

Somit kann zwar die Anzahl der Schritte bezüglich dem Vorschub des plattenförmigen Materials und dem Hindurchführen durch den Arbeitsbereich erhöht sein, jedoch wird die Qualität der Werkstücke durch Vermeidung von Nachsetzstellen erhöht.

Eine weitere vorteilhafte Ausgestaltung des Verfahrens sieht vor, dass bei Schneidkonturen von Werkstücken, die größer als die Länge eines Arbeitsbereiches sind, diese Schneidkontur in eine erste und zumindest einen weiteren, unmittelbar darauffolgenden Arbeitsschritt aufgetrennt werden. Dadurch kann die Anzahl der Nachsetzstellen für ein solches Bauteil reduziert sein. Ist eine Nachsetzbearbeitung erforderlich, dann können die Nachsetzstellen so gelegt sein, dass die Qualität der Schneidkontur wenig beeinflusst wird, indem zum Beispiel die Nachsetzstellen in Richtungsänderungen in der Schneidkontur platziert werden.

Des Weiteren ist bevorzugt vorgesehen, dass in jedem Arbeitsschritt Werkstücke hergestellt werden, deren Schneidkonturen mit einer Länge bearbeitet werden, die gleich oder kleiner als die Länge des Arbeitsbereiches der Laserbearbeitungsmaschine unabhängig von ihrer Ausrichtung innerhalb des plattenförmigen Materials ist. Dadurch kann die bisherige bekannte Optimierung einer Schachtelung von verschiedenen Geometrien von Werkstücken innerhalb des plattenförmigen Materials beibehalten werden.

Eine weitere vorteilhafte Ausgestaltung des Verfahrens sieht vor, dass das plattenförmige Material in Transportrichtung mit einem Verfahrweg durch den Arbeitsbereich verfahren wird, der kleiner als die Länge des Arbeitsbereiches ist. Hierzu kann bevorzugt ein Antriebssystem mit einer hohen Positioniergenauigkeit, wie beispielsweise ein Zahnstangenantrieb oder ein Linearantrieb vorgesehen sein, so dass eine exakte Weitertaktung des plattenförmigen Materials mit einer hohen Maßhaltigkeit ermöglicht wird.

Für eine hohe Teilegenauigkeit sowie hochgenaue Positionierung von Ausschnitten oder Konturen zueinander innerhalb des plattenförmigen Materials ist eine variable Abarbeitung in der Reihenfolge der Arbeitsschritte möglich. Dazu können zunächst innere Konturen in einem ersten Arbeitsbereich mit durchgängiger Schneidkontur hergestellt werden. Dann wird in einen zweiten oder weiteren Arbeitsbereich weiter getaktet, bis alle inneren Konturen hergestellt sind. Darauffolgend, nach Abschluss der Herstellung der inneren Konturen, kann die Außenkontur des Werkstückes in einem ersten und zumindest einen weiteren, unmittelbar darauffolgenden Arbeitsschritt eingebracht werden. Dazu kann die Transportrichtung für die Bearbeitung des plattenförmigen Materials entlang des Verfahrweges in beide Richtungen erfolgen.

Die der Erfindung zugrundeliegende Aufgabe wird des Weiteren durch ein Datenverarbeitungsprogramm gelöst, umfassend Befehle, die bei der Ausführung des Programms durch einen Computer einer Bearbeitungsanlage diesen veranlassen, die Schritte des Verfahrens nach einem der Ansprüche 1 bis 6 auszuführen, bei welcher alle vollständigen Schneidkonturen für ein Werkstück oder mehrere Werkstücke innerhalb eines Arbeitsbereiches, die in einem Schneidvorgang während eines ersten Arbeitsschrittes herstellbar sind, ermittelt werden und des Weiteren Schneidkonturen für ein oder mehrere Werkstücke innerhalb des Arbeitsbereiches ermittelt werden, die aufgrund deren Werkstückabmessung nicht oder nur teilweise innerhalb des Arbeitsbereiches liegen und während des ersten Arbeitsschrittes herstellbar sind. Dadurch kann eine prozessoptimierte Abarbeitung von dem plattenförmigen Material vorgesehen sein, deren Länge größer als der Bearbeitungsbereich einer Bearbeitungsstation der Bearbeitungsanlage ist. Gleichzeitig kann dadurch eine Optimierung bezüglich einer Verfahrbewegung des plattenförmigen Werkstückes erfolgen, um mittels einer geringen Anzahl von Nachsetzmarken die Werkstücke herzustellen, die in der Länge größer sind als der Arbeitsbereich der Bearbeitungsmaschine.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Bearbeitungsanlage,
Figur 2 eine perspektivische Ansicht einer Bearbeitungsmaschine,
Figur 3 eine schematische Ansicht auf ein teilweise bearbeitetes plattenförmiges Material nach einem ersten Arbeitsschritt,
Figur 4 eine schematische Ansicht auf ein teilweise bearbeitetes plattenförmiges Material nach einem zweiten Bearbeitungsschritt,
Figur 5 eine schematische Ansicht von oben auf das plattenförmige Material gemäß Figuren 4 und 5 nach einem weiteren Bearbeitungsschritt, und
Figuren 6 bis 9 schematische Ansichten im Ablauf zur Herstellung von Innen- und Außenkonturen in das plattenförmige Material in der Reihenfolge deren Abarbeitung.

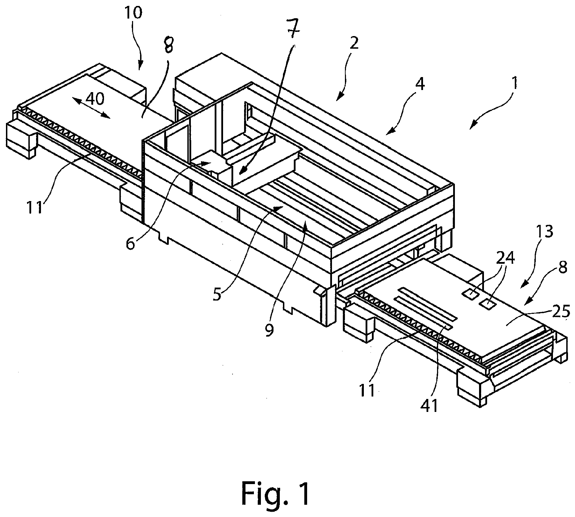

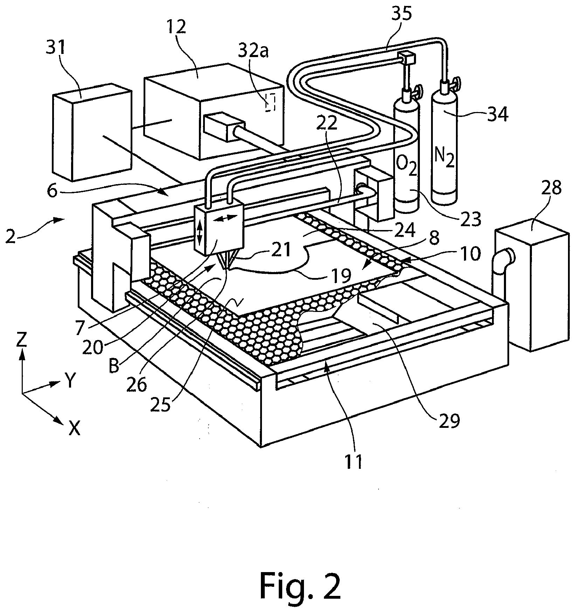

In Figur 1 ist perspektivisch eine Bearbeitungsanlage 1 zum trennenden Bearbeiten von plattenförmigen Materialien 8 dargestellt, die aus Metall bestehen. Diese Bearbeitungsanlage 1 umfasst eine Bearbeitungsmaschine 2, welche im gezeigten Beispiel eine Laserschneidmaschine ist, die in Figur 2 im Detail noch erörtert wird. Die Bearbeitungsanlage 1 könnte alternativ auch eine Plasmaschneidmaschine oder Stanz-/Laserkombinationsmaschine umfassen. Die Bearbeitungsmaschine 2 ist durch eine Umhausung 4 umgeben. Innerhalb der Umhausung 4 ist eine Bearbeitungsstation 5 vorgesehen, in der eine Schneideinheit 6 mit zumindest einem Schneidkopf 7, insbesondere Laserschneidkopf (Figur 2), innerhalb einer horizontalen Bewegungsebene innerhalb eines Arbeitsbereiches 9 verfahrbar ist. Außerhalb der Umhausung 4 ist eingangsseitig eine Beladestation 10 und ausgangsseitig eine Entladestation 13 vorgesehen. Vorzugsweise ist die Beladestation 10 durch ein Zusatzpalettenkonzept oder einen Palettenwechsel gebildet. Die Entladestation 13 ist bevorzugt durch einen Palettenwechsler gebildet. Solche Palettenwechsler umfassen verfahrbare Paletten 11. Weitere Handlingseinrichtungen oder Auflageflächen zur Aufnahme eines unbearbeiteten plattenförmigen Materials 8 in der Beladestation 10 sowie in der Entladestation 13 sind ebenfalls möglich.

Ein als Rohmaterial ausgebildetes plattenförmiges Material 8 wird über die Beladestation 10 der Bearbeitungsmaschine 2 zugeführt, so dass diese in dem Arbeitsbereich 9 der Bearbeitungsmaschine 2 mittels dem Laserschneidkopf 7 bearbeitet wird. Anschließend wird das bearbeitete plattenförmige Material 8 aus der Umhausung 4 herausgeführt und in die Entladestation 13 verfahren. Durch eine Handlingseinrichtung kann vollautomatisiert, teilautomatisiert oder teilweise auch manuell das bearbeitete plattenförmige Material 8 bzw. die Werkstücke 24, 41 und/oder das Restgitter 25 aus der Entladestation 13 entnommen werden.

In Figur 2 ist perspektivisch die Bearbeitungsmaschine als Laserschneidmaschine 2 dargestellt. Diese ist beispielsweise eine CO₂-Laserschneidmaschine mit einer CO₂-Laserquelle 12. Ein von der Laserquelle 12 erzeugter Laserstrahl 21 wird mittels einer Strahlführung 22 von nicht näher dargestellten Umlenkspiegeln zum Laserschneidkopf 7 geführt und in diesem fokussiert. Danach wird der Laserstrahl 21 durch eine Schneiddüse 20 senkrecht zur Oberfläche eines plattenförmigen Materials 8 ausgerichtet. Die Strahlachse (optische Achse) des Laserstrahls 21 verläuft senkrecht zur Oberfläche des plattenförmigen Materials 8. Der Laserstrahl 21 wirkt am Prozessort B gemeinsam mit einem Prozessgasstrahl 26 auf das plattenförmige Material 8 ein. Alternativ kann die Laserschneidmaschine 2 einen Festkörperlaser als Laserquelle aufweisen, dessen Strahlung mit Hilfe eines Lichtleitkabels zum Laserschneidkopf 7 geführt wird.

Zum Laserschneiden des plattenförmigen Materials 8 wird mit dem Laserstrahl 21 unter Zuführung von einem Prozessgasstrahl 26 zunächst eingestochen. Nachfolgend wird der Laserstrahl 21 über das plattenförmige Material 8 bewegt, so dass ein durchgängiger Schnittspalt 19 entsteht, an dem der Laserstrahl 21 das plattenförmige Material 8 durchtrennt. Dadurch entsteht zumindest ein freigeschnittenes Werkstück 24 im Restgitter 25.

Die während dem Einstechen und Laserschneiden entstehenden Partikel und Gase können mit Hilfe einer Absaugeinrichtung 28 aus einer Absaugkammer 29 abgesaugt werden.

Die Ansteuerung der Laserschneidmaschine 2 und/oder der Bearbeitungsanlage 1 erfolgt über eine Maschinen-Steuerungseinrichtung 31. Die Maschinen-Steuerungseinrichtung 31 steuert beispielsweise den Einstechvorgang und übernimmt die weiteren Steueraufgaben der Laserschneidmaschine 2 zur Bildung des Schnittspalts 19. Die Maschinen-Steuerungseinrichtung 31 steht mit einer Laser-Steuerungseinrichtung 32 in signaltechnischer Verbindung, die typischerweise in der Laserquelle 12 integriert ist.

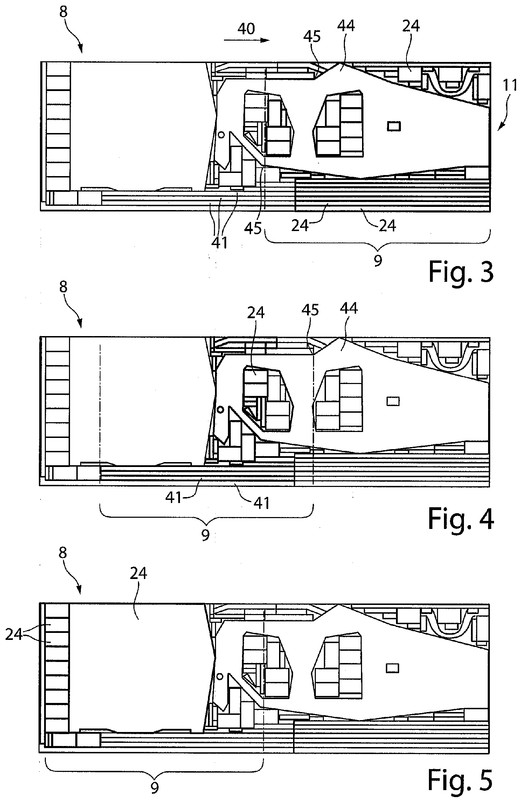

In Figur 3 ist eine schematische Ansicht auf ein plattenförmiges Material 8 dargestellt. Das plattenförmige Material 8 ist, ausgehend von der Beladestation 10, in den Arbeitsbereich 9 der Bearbeitungsmaschine 2 gemäß Transportrichtung 40 eingefahren. Innerhalb des Arbeitsbereiches 9 werden alle Werkstücke 24 ermittelt, die vollständig innerhalb des Arbeitsbereiches 9 liegen, das heißt, dass die Schneidkonturen der Werkstücke 24 innerhalb des Arbeitsbereiches 9 sind. In einem Bearbeitungsprogramm der Maschinen-Steuerungsvorrichtung 31 ist die Lage, die Größe und/oder die Ausrichtung der Werkstücke 24 innerhalb des plattenförmigen Materials 8 bekannt. Mittels eines Schachtelprogrammes wird eine optimierte Ausrichtung und Anordnung der Werkstücke 24 zueinander vorgenommen, um Abfallteile bzw. das Restgitter 25 zu minimieren.

Gemäß der Erfindung werden solche Werkstücke 41, welche teilweise innerhalb des Arbeitsbereiches 9 für einen ersten Arbeitsschritt liegen und sich auch außerhalb des Arbeitsbereiches 9 erstrecken, jedoch in der Länge gleich oder kleiner als die Größe des Arbeitsbereiches 9 sind, in diesem ersten Arbeitsschritt nicht teilweise geschnitten. Solche Werkstücke 41 werden, gemäß der Erfindung, in dem zweiten Arbeitsschritt geschnitten, wie nachfolgend in Figur 4 dargestellt sein wird. Jedoch werden die Schneidkonturen der Werkstücke 44, die aufgrund ihrer Werkstücklänge aufgetrennt werden müssen, bis zur von der Maschinensteuerung ermittelten Schneidkonturtrennstelle 45 teilweise geschnitten.

Nachdem alle Werkstücke 24 ermittelt wurden, die in der Größe kleiner als der Arbeitsbereich 9 sind und vollständig innerhalb des Arbeitsbereiches 9 liegen, werden die Werkstücke 24 mittels des Laserstrahls 21 geschnitten. Darüber hinaus werden die aufzutrennenden Werkstücke 44 bis zur Schneidkonturtrennstelle 45 geschnitten. Daraus ergibt sich beispielsweise die in Figur 3 dargestellte Anordnung der vollständig geschnittenen Werkstücke 24 und der teilweise geschnittenen bzw. aufgetrennten Werkstücke 44, welche mit dicken Linien dargestellt sind.

Darauffolgend wird das plattenförmige Material 8 in Transportrichtung 40 in der Bearbeitungsmaschine 2 weitergetaktet. Beispielsweise werden für die Weitertaktung die Werkstücke 41 zugrundegelegt, so dass diese Werkstücke 41 wiederum vollständig innerhalb eines Arbeitsbereiches 9 liegen. Der Vorschub des plattenförmigen Materials 8 in Transportrichtung 40 bestimmt sich nach der noch verbleibenden Länge der zu bearbeitenden Werkstücke 41 und/oder aufgetrennten Werkstücke 44, welche zumindest teilweise gegenüber dem vorherigen Arbeitsschritt noch außerhalb des Arbeitsbereiches 9 liegen.

Darauffolgend wird aus dem Datenverarbeitungsprogramm ermittelt, welche Werkstücke 24, 41, 44 nach der Weitertaktung wiederum vollständig und/oder teilweise innerhalb des Arbeitsbereiches 9 liegen, um diese Werkstücke 24, 41, 44 durch den Schneidprozess herzustellen.

In einem dritten oder weiteren Arbeitsschritt, welcher in Figur 5 dargestellt ist, wiederholt sich die Verfahrensweise, welche in Figur 3 und Figur 4 beschrieben ist. Die Hindurchführung des plattenförmigen Materials 8 durch den Arbeitsbereich 9 der Bearbeitungsmaschine 2 erfolgt immer in Abhängigkeit von Schneidkonturen der Werkstücke 24, 41, 44 die gleichlang oder kleiner als der Arbeitsbereich 9 sind, so dass aufeinanderfolgend die Herstellung einer vollständigen Schneidkontur des jeweiligen Werkstückes 24, 41, 44 ermöglicht ist.

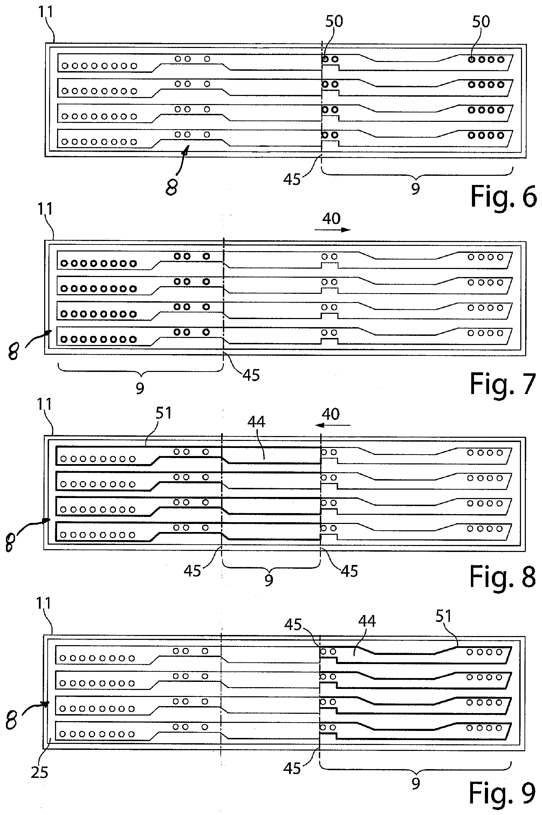

Eine weitere Möglichkeit dieses Verfahrens zur Bearbeitung des plattenförmigen Materials 8 ist in den Figuren 6 bis 9 dargestellt. Dieses Verfahren ermöglicht eine hochgenaue Positionierung von inneren Konturen bzw. Ausschnitten 50 und/oder äußeren Konturen 51 zueinander innerhalb des plattenförmigen Materials 8. Dazu ist eine variable Abarbeitung in der Reihenfolge der Arbeitsschritte denkbar. Zunächst werden die inneren Konturen 50 in einem ersten Arbeitsbereich 9 hergestellt. Dann wird in einen zweiten oder weiteren Arbeitsbereich 9 weiter getaktet, bis alle inneren Konturen 50 hergestellt sind. Zum Schluss wird die Außenkontur 51 des Werkstückes 44 in einem ersten und zumindest einen weiteren, unmittelbar darauffolgenden Arbeitsschritt aufgetrennt. Dazu kann die Transportrichtung 40 zum Nachsetzen des plattenförmigen Materials 8 in den jeweiligen Arbeitsbereich 9 in beide Richtungen erfolgen.

Dadurch lassen sich plattenförmige Materialien 8 bearbeiten, deren Länge größer als die Länge des Arbeitsbereiches 9 der Bearbeitungsmaschine 2 ist, und die Anzahl der Nachsetzstellen wird auf einem Minimum reduziert. Ein Eingriff in die Geometrie bzw. die Anordnung der Werkstücke innerhalb des plattenförmigen Materials 8 ist dabei nicht erforderlich oder kann reduziert sein.

Bei diesem Verfahren wird also die Weitertaktung oder der Vorschub des plattenförmigen Materials 8 nicht an die Länge des Arbeitsbereiches 9 angepasst, um diese maximal auszunutzen, sondern daran, dass in jeden weitergetakteten Arbeitsschritt eine vollständige Schneidkontur der Werkstücke 24, 41 eingebracht werden kann. Dabei kann eine Weitertaktung sowohl in als auch entgegen der Transportrichtung 40 relativ zum Arbeitsbereich 9 erfolgen.

## Patentansprüche

1. Verfahren zum Bearbeiten von einem plattenförmigen Material (8) mittels eines Schneidstrahls (21) in einer Bearbeitungsmaschine (2) zur Herstellung von Werkstücken (24, 41),
- bei dem das plattenförmige Material (8) in einer Erstreckungsrichtung größer als ein Arbeitsbereich (9) der Bearbeitungsmaschine (2) ist,
- bei dem ein Bearbeitungskopf (7) in einer horizontalen Ebene innerhalb des Arbeitsbereiches (9) verfahren wird und das plattenförmige Material (8) in einer Transportrichtung (40), welches der größeren Erstreckungsrichtung des plattenförmigen Materials (8) entspricht, schrittweise in dem Arbeitsbereich (9) der Bearbeitungsmaschine (2) in eine erste Position übergeführt wird,
- bei dem in einem Bearbeitungsprogramm Werkstücke (24, 41) zueinander ausgerichtet und geschachtelt werden,
**dadurch gekennzeichnet, dass**:
- das plattenförmige Material (8) in einem ersten Arbeitsschritt in dem Arbeitsbereich (9) positioniert wird und aus dem Bearbeitungsprogramm alle vollständigen Schneidkonturen von einem oder mehreren Werkstücken (24, 41) innerhalb des Arbeitsbereiches (9) ermittelt werden, die gleich groß oder kleiner als der Arbeitsbereich (9) sind und die Werkstücke (24, 41) in diesem Arbeitsschritt in einem Schneidvorgang hergestellt werden,
- solche Werkstücke (24, 41), welche teilweise innerhalb des Arbeitsbereiches (9) für einen ersten Arbeitsschritt liegen und sich auch außerhalb des Arbeitsbereich (9) erstrecken, jedoch in der Länge gleich oder kleiner als die Größe des Arbeitsbereichs (9) sind, in dem ersten Arbeitsschritt nicht geschnitten werden, und
- das plattenförmige Material (8) in einem zweiten oder weiteren Arbeitsschritt in Transportrichtung (40) weitergetaktet wird und in einer weiteren Position in dem Arbeitsbereich (9) positioniert wird, und
- Schneidkonturen von Werkstücken (24, 41), die sich im ersten Arbeitsschritt über den Arbeitsbereich (9) hinaus erstrecken und deren Länge in Transportrichtung (40) des plattenförmigen Materials (8) gleich oder kleiner als die Länge des Arbeitsbereiches (9) sind, in einem nachfolgenden Arbeitsschritt in das plattenförmige Material eingebracht werden, in dem das plattenförmige Material (8) in eine weitere Position innerhalb des Arbeitsbereiches (9) weitergetaktet wird, so dass die vollständige Schneidkontur dieser Werkstücke (24, 41) in das plattenförmige Material (8) geschnitten wird.

2. Verfahren nach Anspruch 1, **dadurch gekennzeichnet, dass** die Schneidkonturen von Werkstücken (44), die größer als die Länge des Arbeitsbereiches (9) sind, der Schneidvorgang in einen ersten und in zumindest einen weiteren, unmittelbar darauffolgenden Arbeitsschritt aufgetrennt werden.

3. Verfahren nach einem der vorhergehenden Ansprüche, **dadurch gekennzeichnet, dass** die Reihenfolge zur Herstellung der Schneidkonturen (50, 50') beliebig erfolgen kann und eine variable Herstellung der Schneidkonturen von Werkstücken (44) unter Optimierung von Trennstellen in der Schneidkontur in Bearbeitungsschritten erfolgt.

4. Verfahren nach einem der vorhergehenden Ansprüche, **dadurch gekennzeichnet, dass** in jedem Arbeitsschritt Werkstücke (24, 41) hergestellt werden, deren Schneidkonturen eine Länge aufweisen, die gleich oder kleiner als die Länge des Arbeitsbereiches (9) der Bearbeitungsmaschine (2) unabhängig von ihrer Ausrichtung auf dem plattenförmigen Material (8) ist.

5. Verfahren nach einem der vorhergehenden Ansprüche, **dadurch gekennzeichnet, dass** das plattenförmige Material (8) in Transportrichtung (40) mit einer Verfahrbewegung durch den Arbeitsbereich (9) verfahren wird, die kleiner als die Länge des Arbeitsbereiches (9) ist.

6. Verfahren nach einem der vorhergehenden Ansprüche, **dadurch gekennzeichnet, dass** in einem ersten und zumindest einem weiteren Arbeitsbereich (9) zumindest eine Innenkontur (50) des zumindest eines Werkstücks (24, 44) hergestellt wird und darauffolgend zumindest eine Außenkontur (51) des zumindest einen Werkstücks (24, 44) hergestellt wird, wobei das plattenförmige Material (8) in und entgegen der Transportrichtung (40) durch den Arbeitsbereich (9) verfahren wird.

7. Datenverarbeitungsprogramm umfassend Befehle, die bei der Ausführung des Programms durch einen Computer einer Bearbeitungsanlage diesen veranlassen, die Schritte des Verfahrens nach einem der Ansprüche 1 bis 6 auszuführen, durch welches alle vollständigen Schneidkonturen (50, 51) für ein oder mehrere Werkstücke (24) ermittelt werden, die innerhalb eines Arbeitsbereiches (9) liegen und in einem Schneidvorgang während eines ersten Arbeitsschrittes herstellbar sind und Schneidkonturen (50, 51) ermittelt werden, für ein oder mehrere aufgetrennte Werkstücke (44), die aufgrund ihrer Werkstückabmessung nicht oder nur teilweise innerhalb des Arbeitsbereiches (9) während des ersten Arbeitsschrittes herstellbar sind.

## Claims

1. A method of processing a plate-shaped material (8) by means of a cutting beam (21) in a processing machine (2) for manufacturing workpieces (24, 41),
- wherein the plate-shaped material (8) in one direction of extension is larger than a working range (9) of the processing machine (2)
- wherein a processing head (7) is moved in a horizontal plane within the working range (9) and the plate-shaped material (8) is transferred stepwise in a direction of transport (40), which corresponds to the larger direction of extension of the plate-shaped material (8), to a first position within said working range (9) of the processing machine (2),
- wherein in a processing program, workpieces (24, 41) are oriented and nested with respect to each other,
**characterised in that**
- in a first process step, the plate-shaped material (8) is positioned within the working range (9) and the processing program is used to detect all complete cutting contours of one or several workpieces (24, 41) which are located within said working range (9) and are of the same dimension or smaller than the working range (9), and the workpieces (24, 41) are manufactured by a single cutting operation during this process step,
- those workpieces (24, 41) which are located partially within the working range (9) for a first process step and also extend beyond said working range (9) are not cut in the course of the first process step, although they are of the same dimension or smaller than the dimension of the working range (9), and
- in a second or further process step, the plate-shaped material (8) is moved forward by one clock cycle in the direction of transport (40) and is positioned in a further position within the working range (9), and
- cutting contours of workpieces (24, 41) which, in the first process step extend beyond the working range (9) and whose lengths, as considered in the direction of transport (40) of the plate-shaped material (8), are equal to or smaller than the length of the working range (9) are realised in the plate-shaped material in a subsequent process step in which said plate-shaped material (8) is moved forward by one clock cycle to a further position within the working range (9), such that the entire cutting contour of these workpieces (24, 41) may be cut into the plate-shaped material (8).

2. The method as claimed in claim 1, **characterised in that** for cutting contours of workpieces (44) which are longer than the length of the working range (9), the cutting operation is split into a first process step and at least one immediately following further process step.

3. The method as claimed in any of the preceding claims, **characterised in that** the operations for performing the cutting contours (50, 50') may be carried out in a random sequence and **in that** the cutting contours of workpieces (44) may be realised variably in a number of processing steps so as to optimise the separation points in the cutting contour.

4. The method as claimed in any of the preceding claims, **characterised in that** in each process step workpieces (24, 41) are manufactured whose cutting contours have a length that is equal to, or smaller than, the length of the working range (9) of the processing machine (2), regardless of their orientation on the plate-shaped material (8).

5. The method as claimed in any of the preceding claims, **characterised in that** the plate-shaped material (8) is moved through the working range (9) in the direction of transport (40) with a movement of travel the steps of which have a length that is smaller than the length of the working range (9).

6. The method as claimed in any of the preceding claims, **characterised in that** within a first and at least one further working range (9) at least one inner contour (50) of the at least one workpiece (24, 44) is realised and subsequently at least one outer contour (51) of the at least one workpiece (24, 44) is realised, with the plate-shaped material (8) being moved through the working range (9) in and against the direction of transport (40).

7. A data processing program comprising instructions which, upon execution of said program, cause a computer of a processing unit to: execute the steps of the method as claimed in any one of claims 1 to 6, determining all the complete cutting contours (50, 51) for one or several workpieces (24) that lie within a working range (9) and may be realised by a single cutting operation during a first process step; and determining those cutting contours (50, 51) for one or several split workpieces (44) which, due to their work piece dimensions, cannot be realised, or can only be partially realised, within the working range (9) during said first process step.

## Revendications

1. Procédé destiné à usiner un matériau (8) en forme de plaque dans une machine d'usinage (2) au moyen d'un jet de coupe (21) en vue de fabriquer des pièces (24, 41),
- lors duquel le matériau (8) en forme de plaque est, dans une direction d'extension, plus grand qu'une zone de travail (9) de la machine d'usinage (2),
- lors duquel une tête d'usinage (7) est déplacée dans un plan horizontal à l'intérieur de la zone de travail (9) et le matériau (8) en forme de plaque placé dans une direction de transport (40) qui correspond à la direction d'extension la plus grande du matériau (8) en forme de plaque est amené pas à pas, dans la zone de travail (9) de la machine d'usinage (2), dans une première position,
- lors duquel, dans un programme d'usinage, des pièces (24, 41) sont orientées les unes par rapport aux autres et sont imbriquées les unes dans les autres,
**caractérisé en ce que**
- dans une première étape de travail, le matériau (8) en forme de plaque est positionné dans la zone de travail (9) et qu'à partir du programme d'usinage sont déterminés tous les contours de coupe complets d'une ou de plusieurs pièces (24, 41) situés à l'intérieur de la zone de travail (9) qui sont aussi grands ou plus petits que ladite zone de travail (9), et que les pièces (24, 41) sont fabriquées dans ladite étape de travail grâce à une opération de coupe,
- les pièces (24, 41) qui se situent en partie à l'intérieur de la zone de travail (9) pour une première étape de travail et qui s'étendent également à l'extérieur de ladite zone de travail (9) mais dont la longueur est cependant égale ou inférieure à la grandeur de la zone de travail (9) ne sont pas coupées dans la première étape de travail, et
- dans une deuxième ou autre étape de travail, le matériau (8) en forme de plaque avance de manière cadencée dans la direction de transport (40) et est positionné dans une autre position dans ladite zone de travail (9), et
- des contours de coupe de pièces (24, 41) qui s'étendent, dans la première étape de travail, au-delà de la zone de travail (9) et dont la longueur dans la direction de transport (40) du matériau (8) en forme de plaque est égale ou inférieure à la longueur de la zone de travail (9) sont réalisés dans le matériau en forme de plaque dans une étape de travail suivante lors de laquelle le matériau (8) en forme de plaque est avancé de manière cadencée dans une autre position à l'intérieur de la zone de travail (9) de sorte que les contours de coupe complets desdites pièces (24, 41) sont coupés dans le matériau (8) en forme de plaque.

2. Procédé selon la revendication 1, **caractérisé en ce que** pour des pièces (44) dont les contours de coupe sont plus grands que la longueur de la zone de travail (9), l'opération de coupe est subdivisée en une première étape de travail et en au moins une autre étape de travail lui succédant immédiatement.

3. Procédé selon l'une quelconque des revendications précédentes, **caractérisé en ce que** les contours de coupe (50, 50') peuvent être réalisés dans un ordre quelconque et qu'une réalisation variable des contours de coupe de pièces (44) peut être effectuée en plusieurs étapes d'usinage en optimisant les points de séparation dans les contours de coupe.

4. Procédé selon l'une quelconque des revendications précédentes, **caractérisé en ce que** dans chaque étape de travail sont fabriquées des pièces (24, 41) dont les contours de coupe présentent une longueur qui est égale ou inférieure à la longueur de la zone de travail (9) de la machine d'usinage (2), et ce indépendamment de leur orientation sur le matériau (8) en forme de plaque.

5. Procédé selon l'une quelconque des revendications précédentes, **caractérisé en ce que** le matériau (8) en forme de plaque est déplacé dans la direction de transport (40) à travers la zone de travail (9) avec un mouvement de déplacement dont la longueur est inférieure à celle de ladite zone de travail (9).

6. Procédé selon l'une quelconque des revendications précédentes, **caractérisé en ce que** dans une première et au moins une autre zone de travail (9) est fabriqué au moins un contour intérieur (50) de ladite au moins une pièce (24, 44) et qu'ensuite est fabriqué au moins un contour extérieur (51) de ladite au moins une pièce (24, 44), le matériau (8) en forme de plaque étant déplacé à travers la zone de travail (9) dans la direction de transport (40) et dans le sens inverse de celle-ci.

7. Programme de traitement de données comprenant des instructions qui, lors de l'exécution du programme par un ordinateur d'une installation d'usinage, font en sorte que celui-ci exécute les étapes du procédé selon l'une quelconque des revendications 1 à 6 grâce auquel sont déterminés tous les contours de coupe complets (50, 51) pour une ou plusieurs pièces (24) qui sont situés à l'intérieur d'une zone de travail (9) et qui peuvent être fabriqués en une seule opération de coupe pendant une première étape de travail, et sont déterminés des contours de coupe (50, 51) pour une ou plusieurs pièces (44) qui, en raison de leurs dimensions, nécessitent une coupe subdivisée, ne pouvant pas ou ne pouvant que partiellement être fabriqués à l'intérieur de la zone de travail (9) pendant la première étape de travail.
